# EUROPÄISCHE PATENTANMELDUNG

(11) **EP 2 561 954 A1**
(43) Veröffentlichungstag der Anmeldung: **27.02.2013**
(21) Anmeldenummer: 12005343.4
(22) Anmeldetag: 21.07.2012
(51) Int. Cl.: B23Q 1/01, B23Q 1/62

(54) **Maschinenständer einer Werkzeugmaschine**

(30) Priorität: 23.08.2011 DE 102011110834
(71) Anmelder: KERN Micro- und Feinwerktechnik GmbH & Co. KG, 82438 Eschenlohe (DE)
(72) Erfinder: Fritz, Matthias, 82438 Eschenlohe (DE)
(74) Vertreter: Flosdorff, Jürgen

(57) **Zusammenfassung**

Der Maschinenständer einer Werkzeugmaschine ist dadurch gekennzeichnet, dass er eine schwere Bodenplatte und einen darauf angeordneten Achsträger aufweist, die lösbar miteinander verbindbar sind.

## Beschreibung

Um die Schwingungsanfälligkeit einer Werkzeugmaschine möglichst gering zu halten und die Regelgüte der Linearachsen und - falls vorhanden - der Rotationsachsen zu verbessern, wird bisher versucht, das Gewicht eines Maschinenständers so weit wie möglich zu erhöhen. Dabei kommt es zwangsläufig zu großen Konstruktionen, die bei der Bearbeitung und dem Transport schwer zu handhaben sind und teuer werden.

Der vorliegenden Erfindung liegt die Aufgabe zugrunde, einen Maschinenständer anzugeben, bei dem die obigen Nachteile vermieden sind.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass der Maschinenständer einer Werkzeugmaschine aus einer schweren Bodenplatte, die vorzugsweise aus Beton besteht, und einem darauf angeordneten Achsträger zusammen gesetzt ist, die lösbar miteinander verbunden sind. Damit ist der Maschinenständer in einen "statischen Teil", dessen Gewicht bei geringen Kosten groß ist, und einen "funktionalen Teil" getrennt, der die metallischen Schnittstellen, die Linearachsen und gegebenenfalls Rotationsachsen, aufweist und ein verhältnismäßig kleines Gewicht hat.

Die Bodenplatte ist sehr kostengünstig bevorzugt aus Beton, der durch Stahlarmierungen verstärkt ist, herzustellen, ohne dass die Erfindung hierauf beschränkt ist. Beispielsweise kommt auch ein anderes schweres Material wie Polymerbeton, der aus Steinen, aushärtenden Harzmischungen und Zusatzstoffen besteht, für die Bodenplatte in Betracht. Als weiteres Material kommt auch eine Ausführung aus Stahl oder Gusseisen in Betracht, soweit das Gewicht ausreichend hoch ist.

Der "funktionate Teil"" d.h. der Achsträger, ist wesentlich leichter und damit einfach zu handhaben. Da die beiden Hauptbestandteile des Maschinenständers trennbar sind, sind sie u.a. leichter transportierbar, und sie können auf einfache Weise zusammen gesetzt werden, indem sie bevorzugt durch Spannelemente miteinander verbunden werden. Zwischen dem Achsträger und der Bodenplatte können dämpfende Elemente angeordnet sein, die äußere Einflüsse minimieren.

Mit großem Vorteil wird weiter vorgeschlagen, dass der Achsträger, der im wesentlichen eine kubische Form haben kann, die drei Linearachsen trägt, nämlich das X-, Y- und Z-Achsengestell mit den zugehörigen Führungsbahnen.

Dabei ist bevorzugt vorgesehen, dass auf der Oberseite des Achsträgers eine X-Achsen-Führungsbahn für das X-Achsengestell angebracht ist. Auf der Oberseite des X-Achsengestells befindet sich eine Y-Achsen-Führungsbahn für ein Y-Achsengestell. An der vorderen Stirnseite des Y-Achsengestells ist eine Z-Achsen-Führungsbahn für ein Z-Achsengestell angebracht, das mit einer Arbeitsspindel versehen ist.

Weiter wird mit Vorteil vorgeschlagen, dass die drei Achsengestelle aus Leichtbauwerkstoffen wie z.B. Aluminium bestehen.

Auf der Oberseite des Achsträgers befindet sich somit die Schnittstelle zur X-Achse, auf die aufbauend die Y-Achse und die Z-Achse folgen. Wenn die Werkzeugmaschine nur diese drei Linearachsen aufweist, ist an der vorderen Stirnseite des Achsträgers ein feststehender Werkstücktisch angeordnet, an dem ein zu bearbeitendes Werkstück befestigt wird. Die Arbeitsspindel mit dem Werkzeug ist über die drei Linearachsen gegenüber dem fest stehenden Werkstück bewegbar.

Des weiteren wird vorgeschlagen, dass der Achsträger eine zum Arbeitsbereich hin offene Aussparung hat, in der der Drehantrieb für zwei zueinander senkrechte Rotationsachsen angeordnet sein kann, mit denen ein Werkstücktisch unter der Arbeitsspindel drehbar ist. Bei der vierten und fünften Achse handelt es sich um eine Y-Rotationsachse und eine damit verbundene Z-Rotationsachse, um die das auf dem Werkstücktisch befestigte Werkstück drehbar ist. Mit diesen zwei Rotationsachsen ist die Werkzeugmaschine eine Fünf-Achsenmaschine.

Da die drei Linearachsen an der Oberseite des Achsträgers aufeinander aufbauend angeordnet sind, steht unter der an dem Z-Achsengestell angeordneten Arbeitsspindel ein ausreichender Freiraum für den Werkzeugtisch und den zugehörigen Teilapparat mit der vierten und fünften Achse zur Verfügung.

Die Bodenplatte trägt nicht nur den Achsträger, sondern sie ist vorzugsweise das Grundgestell für alle für die Maschine benötigten Komponenten. Hierzu ist auf der Bodenplatte ein rahmenartiges Zwischengestell angebracht, mit dessen Hilfe ein Schaltschrank, ein Werkzeugwechsler, eine zentrale Kühlanlage, eine Druckluftanlage und sonstige Kleinaggregate befestigt sind, die von der Bodenplatte getragen werden.

Die Erfindung geht somit von dem bisherigen Weg ab, das Gewicht eines Maschinenständers zum Beispiel dadurch zu erhöhen, dass der gesamte Maschinenständer aus Gusseisen mit beträchtlicher Wandstärke besteht und/oder Hohlräume des Maschinenständers mit schwerem Material gefüllt werden. Stattdessen wird der Maschinenständer in einen statischen Teil - der Bodenplatte - und einen beweglichen Teil - den Achsträger für die Linearachsen und gegebenenfalls Rotationsachsen - getrennt, wobei allein das Gewicht der Bodenplatte erheblich erhöht ist, indem sie aus Beton, gegebenenfalls mit Stahlarmierung und schweren Zusatzstoffen, besteht. Damit ist das Gewichtsverhältnis zwischen bewegter und statischer Masse erheblich verbessert, und die Schwingungsanfälligkeit der Werkzeugmaschine verringert.

Die beiden Hauptbestandteile des Maschinenständers sind getrennt leicht zu transportieren und auf einfache Weise zusammensetzbar. Der etwa würfelförmige Achsträger ist die Schnittstelle zur vierten/fünften Achse (Rotationsachsen) und zur X-Achse, womit der Maschinenständer mit den Achsen eine sehr kompakte Form hat.

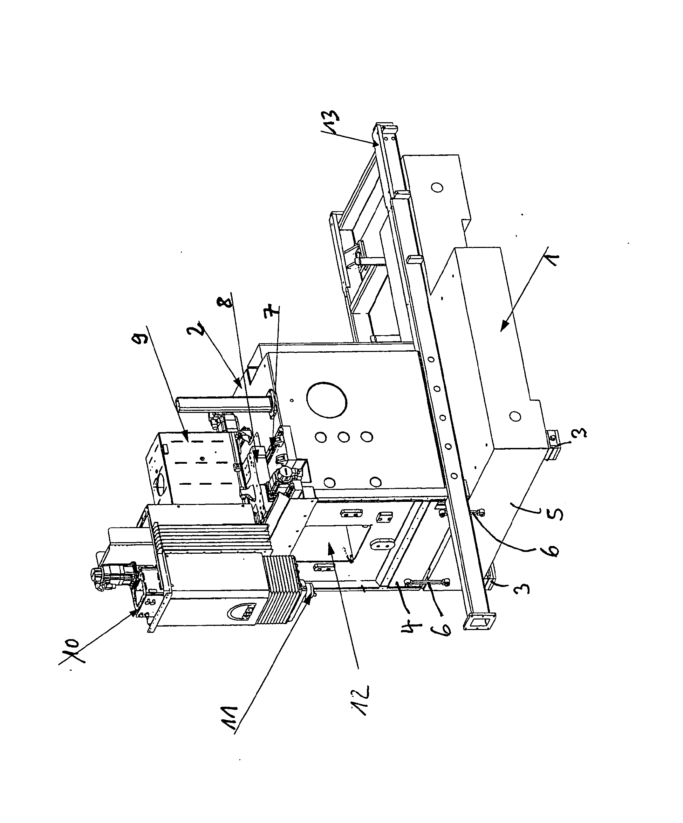

Weitere Einzelheiten der Erfindung ergeben sich aus der nachfolgenden Beschreibung sowie anhand der Zeichnung. Diese zeigt eine Ausführungsform eines Maschinenständers mit den drei Linearachsen und mit einer Aufnahme für zwei Rotationsachsen.

Der Maschinenständer ist aus einer Bodenplatte 1 und einem Achsträger 2 lösbar zusammengesetzt. Die Bodenplatte 1 besteht aus Stahlbeton und hat eine beträchtliche Dicke, so dass die Bodenplatte ein großes Gewicht hat. Sie ruht auf Stützfüßen 3 auf. Auf der Bodenplatte 1 ist der etwa würfelförmige Achsträger 2 so angeordnet, dass seine Stirnwand 4 und die in der Darstellung hintere Seitenwand mit der Stirnkante 5 und der entsprechenden Seitenkante der Bodenplatte 1 fluchten. Durch Spannelemente 6 ist der Achsträger 2 fest - aber lösbar - auf der Bodenplatte 1 befestigt.

Auf der Oberseite des Achsträgers 2 ist eine X-Achsen-Führungsbahn 7 für ein X-Achsengestell 8 angebracht. Auf der Oberseite des X-Achsengestells 8 ist eine Y-Achsen-Führungsbahn für ein Y-Achsengestell 9 befestigt. Dieses ist an seiner vorderen Stirnseite mit einer Z-Achsenführungsbahn versehen, auf der ein Z-Achsengestell 10 vertikal bewegbar ist.

Das Z-Achsengestell 10 ist mit einer Arbeitsspindel 11 versehen, an der ein Werkzeug wie beispielsweise ein Fräswerkzeug befestigbar ist.

Der Achsträger 2 hat eine etwa kubische Aussparung, die zu dem Bearbeitungsraum vor dem Achsträger (unter dem Z-Achsengestell 10) hin offen ist. In dieser Aussparung 12 kann eine Drehantriebseinrichtung für eine Y-Rotationsachse und eine Z-Rotationsachse angeordnet sein, die in der Zeichnung nicht dargestellt sind. Mit den beiden Rotationsachsen ist ein ebenfalls nicht dargestellter Werkstücktisch verbunden, auf dem ein zu bearbeitendes Werkstück befestigbar ist. Dieses Werkstück ist somit um die Y-Achse und um die Z-Achse drehbar.

Auf der Bodenplatte 1 ist ein Zwischengestell 13 befestigt, mit dessen Hilfe alle für die Werkzeugmaschine benötigten Komponenten auf der Bodenplatte 1 befestigbar sind. Hierbei handelt es sich um einen Schaltschrank, einen Werkzeugwechsler, eine Kühlanlage, eine Druckluftanlage und sonstige Kleinaggregate, die in der Zeichnung nicht dargestellt sind.

Es wird betont, dass die Erfindung nicht auf die beschriebenen und dargestellten Ausführungsformen beschränkt ist. Vielmehr sind alle offenbarten Merkmale der Ausführungsformen auch einzeln untereinander anders als oben beschrieben miteinander kombinierbar.

## Patentansprüche

1. Maschinenständer einer Werkzeugmaschine,
**dadurch gekennzeichnet,**
**dass** er eine schwere Bodenplatte (1) und einen darauf angeordneten Achsträger (2) aufweist, die lösbar miteinander verbindbar sind.

2. Maschinenständer nach Anspruch 1,
**dadurch gekennzeichnet,**
**dass** die Bodenplatte (1) aus Beton, vorzugsweise Stahlbeton besteht.

3. Maschinenständer nach einem der Ansprüche 1 oder 2,
**dadurch gekennzeichnet,**
**dass** die Bodenplatte (1) und der Achsträger (2) durch Spannelemente (6) miteinander verbunden sind.

4. Maschinenständer nach einem der Ansprüche 1 bis 3,
**dadurch gekennzeichnet,**
**dass** zwischen der Bodenplatte (1) und dem Achsträger (2) dämpfende Elemente angeordnet sind.

5. Maschinenständer nach einem der Ansprüche 1 bis 4,
**dadurch gekennzeichnet,**
**dass** der Achsträger (2) das X-Achsengestell (8) und darauf aufbauend das Y-, und Z-Achsengestell (9,10) trägt.

6. Maschinenständer nach einem der Ansprüche 1 bis 5,
**dadurch gekennzeichnet,**
**dass** auf der Oberseite des Achsträgers (2) eine X-Achsen-Führungsbahn (7) für das X-Achsengestell (8) angebracht ist.

7. Maschinenständer nach Anspruch 6,
**dadurch gekennzeichnet,**
**dass** auf der Oberseite des X-Achsengestells (8) eine Y-Achse-Führungsbahn für das Y-Achsengestell (9) angebracht ist.

8. Maschinenständer nach Anspruch 7,
**dadurch gekennzeichnet,**
**dass** an der vorderen Stirnseite des Y-Achsengestells (9) eine Z-Achsenführungsbahn für das Z-Achsengestell (10) angebracht ist.

9. Maschinenständer nach einem der Ansprüche 5 bis 8,
**dadurch gekennzeichnet,**
**dass** die drei Achsengestelle (8,9,10) aus Leichtbauwerkstoffen wie Aluminium, faserverstärkten Werkstoffen oder Magnesium hergestellt sind.

10. Maschinenständer nach einem der Ansprüche 1 bis 9,
**dadurch gekennzeichnet,**
**dass** der Achsträger (2) eine zu dem Bearbeitungsbereich hin offene Aussparung (12) zur Aufnahme des Drehantriebs einer Y-Rotationsachse und einer Z-Rotationsachse aufweist, mit denen ein Werkstücktisch um diese Achsen drehbar ist.

11. Maschinenständer nach einem der Ansprüche 1 bis 10,
**dadurch gekennzeichnet,**
**dass** auf der Bodenplatte (1) außerdem ein Schaltschrank, ein Werkzeugwechsler, eine Kühlanlage, eine Druckluftanlage und sonstige Kleinaggregate angeordnet sind.
